# FASCICULE DE BREVET EUROPEEN

(11) **EP 4 598 762 B1**
(45) Date de publication et mention de la délivrance du brevet: **22.07.2026**
(21) Numéro de dépôt: 23776675.3
(22) Date de dépôt: 08.09.2023
(51) Int. Cl.: B60K 1/04, H01M 50/244, H01M 50/202, B60L 50/64, H01M 50/204, H01M 50/209, H01M 50/224, H01M 50/249, H01M 50/271

(54) **DISPOSITIF DE COUVERCLE DE CAISSON DE BATTERIE DE VEHICULE ELECTRIQUE OU HYBRIDE AVEC CALES INTERMEDIAIRES**
ABDECKVORRICHTUNG FÜR EINEN BATTERIEKASTEN EINES ELEKTRO- ODER HYBRIDFAHRZEUGS MIT ZWISCHENABSTANDSHALTERN
COVER DEVICE FOR A BATTERY BOX OF AN ELECTRIC OR HYBRID VEHICLE, COMPRISING INTERMEDIATE SPACERS

(30) Priorité: 04.10.2022 FR 2210134
(43) Date de publication de la demande: 13.08.2025
(73) Titulaire: Stellantis Auto SAS, 78300 Poissy (FR)
(72) Inventeur: BOUVERET, Antoine, 88000 CHANTRAINE (FR); BOUSSEAU, Yves, 25200 MONTBELIARD (FR); UNGER, Mathieu, 25200 MONTBELIARD (FR); SUN, Wei, Shanghai 200233 (CN); LOUIS, André, 70400 ETOBON (FR)
(74) Mandataire: PSIP
(86) Numéro de dépôt international: PCT/FR2023/051358
(87) Numéro de publication internationale: WO 2024/074772

(56) Documents cités:
- WO-A2-2011/134824
- FR-A1- 2 959 603
- FR-A1- 3 101 057

## Description

1. La présente invention concerne un dispositif de couvercle de caisson de batterie de traction d'un véhicule automobile électrique ou hybride, prévu pour être fixé sous le véhicule, qui est équipé de cales intermédiaires avec le plancher du véhicule, ainsi qu'un caisson de batterie comportant ce dispositif de couvercle et un véhicule automobile équipé d'un tel dispositif.

2. L'état de la technique est connu des documents WO 2011134824 A2 et FR 2 959 603 A1.

3. Un type de caisson de batterie de traction pour un véhicule automobile électrique ou hybride, présenté notamment par le document FR-A3-3095168, forme un boîtier plat sensiblement rectangulaire comprenant une tôle de base plate avec des rebords sur son contour, des nervures intérieures pour rigidifier le caisson, et un couvercle avec des rebords rejoignant ceux de la base pour former un boîtier étanche et rigide. Le boîtier protège les cellules de batterie fixées à l'intérieur de l'humidité, de la poussière et des chocs.

4. Le caisson de batterie forme un sous-ensemble préparé à l'avance comprenant les cellules de batterie et les équipements intérieurs nécessaires, appelé « battery pack » en langue anglaise, qui présente sur son contour des points de fixation sous le plancher de la caisse du véhicule.

5. On réalise généralement le couvercle avec une tôle découpée et emboutie, présentant une face sensiblement plate comprenant sur son contour des rebords descendants se terminant par des bords horizontaux tournés vers l'extérieur, formant un plan de joint qui est vissé sur le contour de la base du caisson pour assurer une étanchéité. On obtient une cuvette retournée qui peut présenter sur sa face centrale plate des légères nervures améliorant sa rigidité.

6. On a pour le véhicule équipé de ce caisson successivement en hauteur, en partant du bas, la tôle de base du caisson, les cellules rangées sur cette base, la tôle du couvercle venant au plus près de ces cellules et des équipements intérieurs qui peuvent présenter différentes hauteurs, et un espace intermédiaire vide laissant une lame d'air minimale entre le caisson et le plancher du véhicule formant la base de l'habitacle.

7. En particulier la lame d'air minimale entre le caisson de batterie et le plancher du véhicule permet une ventilation de cet espace ainsi qu'un isolement thermique de l'habitacle assurant une sécurité en cas d'échauffement anormal de la batterie provoquant un emballement thermique, appelé aussi « thermal runaway » en langue anglaise.

8. Dans le cas d'un échauffement important de la batterie qui génère une montée en pression dans le caisson, la tôle du couvercle tend à se déformer vers le haut et à entrer en contact avec le plancher de l'habitacle en le chauffant. On a alors des risques de troubles pour les passagers, et même d'inflammation d'équipements dans l'habitacle. La lame d'air au-dessus du caisson doit présenter une épaisseur suffisante pour éviter ces risques, ce qui pose aussi des problèmes d'espace perdu.

9. Par ailleurs la garde au sol du véhicule, distance entre le sol et le dessous du caisson de batterie, est un paramètre important qu'il faut préserver pour permettre la circulation du véhicule en des endroits variés. On cherche donc à disposer le couvercle du caisson au plus près de ses équipements intérieurs, notamment des cellules de batterie, pour réduire son épaisseur en assurant à la fois en dessous la garde au sol, dans le caisson un maximum d'espace disponible pour recevoir les cellules de batteries afin d'obtenir la meilleure autonomie du véhicule, et au-dessus la lame d'air intermédiaire minimum de sécurité avec le plancher du véhicule.

10. De plus le couvercle du caisson présentant une forme sensiblement plate, si possible peu nervurée pour limiter son encombrement en hauteur, peut alors subir lors du roulage des vibrations qu'il faut limiter afin d'éviter des transmissions de bruits. On peut augmenter l'épaisseur globale du couvercle de manière à améliorer sa rigidité, avec des hauteurs plus grandes de nervures formées dans sa tôle ou en ajoutant des nervures rapportées, ce qui pose des problèmes de réduction de l'espace disponible dans le caisson et de masse plus importante.

11. Pour éviter ce problème on peut disposer entre le couvercle du caisson et le plancher du véhicule des plots entièrement élastiques absorbant les vibrations. Cependant après la fabrication des couvercles par emboutissage, on les empile pour l'emballage, le stockage et le transport. En particulier pour des couvercles présentant des rebords sur leurs contours, leurs surfaces centrales plates peuvent dans l'empilage rester espacées les unes des autres, sans être maintenues lors des manutentions ce qui pourrait les déformer. Dans ce cas des plots entièrement élastiques fixés sur le couvercle s'écrasent par leur souplesse, sans former des cales d'épaisseur qui pourraient soutenir les faces centrales des couvercles. On a des problèmes de risques de déformation des couvercles.

12. La présente invention a notamment pour but d'éviter ces problèmes de l'art antérieur.

13. Elle propose à cet effet un dispositif de couvercle de caisson plat de batterie venant sous le plancher d'une caisse de véhicule automobile électrique ou hybride avec une lame d'air intermédiaire, comprenant un couvercle comportant une tôle présentant une face centrale sensiblement plate disposant de rebords de fixation sur son contour, ce dispositif étant remarquable en ce qu'il comporte plusieurs blocs de calage avec le plancher de la caisse, qui sont fixés sur le dessus de la face centrale, chaque bloc comprenant au moins une cale rigide et une cale souple qui sont superposées.

14. Un avantage de ce dispositif de couvercle et qu'on obtient un ensemble qui peut être préparé dès la fabrication du couvercle, en fixant dessus les blocs de calage donnant une surface supérieure de ces blocs adaptée pour venir en appui sous le plancher du véhicule. On obtient avec les cales souples de ces blocs un amortissement des vibrations du couvercle.

15. On obtient de plus lors de l'empilage des couvercles après leur fabrication, un calage intermédiaire entre les faces centrales des couvercles juxtaposés qui permet, avec les plots empilés sur une même verticale, de résister à un poids important venant d'un grand nombre de couvercles superposés.

16. Le dispositif de couvercle selon l'invention permet ainsi de manière rapide et simple, avec l'ajout des plots multifonctions répartis sur le dessus des couvercles, qui peuvent être formés de manière économique par des moulages, de préserver l'intégrité des couvercles empilés lors des manutentions, et de réduire l'épaisseur de la lame d'air au-dessus du caisson avec une optimisation des volumes.

17. Le dispositif de couvercle selon l'invention peut comporter de plus une ou plusieurs des caractéristiques suivantes, qui peuvent être combinées entre elles.

18. Avantageusement, les cales rigides comportent deux faces parallèles fixées l'une sur le couvercle et l'autre à la cale souple.

19. Avantageusement, les faces parallèles sont reliées entre elles par des cloisons perpendiculaires laissant entre elles des creux.

20. Dans ce cas, suivant un mode de réalisation les faces parallèles présentent des surfaces identiques.

21. Avantageusement, les cales rigides sont réalisées par un moulage de matière plastique.

22. Avantageusement, les blocs de calage sont collés sur le couvercle.

23. Avantageusement, les cales souples de tous les blocs de calage présentent la même épaisseur.

24. En particulier, les blocs de calage peuvent présenter plusieurs épaisseurs totales.

25. L'invention a aussi pour objet un caisson de batterie équipé d'une base fermée par un couvercle comportant des rebords descendants fixés sur le contour de cette base, remarquable en ce qu'il comporte un dispositif de couvercle comprenant l'une quelconque des caractéristiques précédentes.

26. L'invention a de plus pour objet un véhicule automobile électrique ou hybride équipé d'un caisson de batterie de traction de ce véhicule, remarquable en ce qu'il comporte un dispositif de couvercle comprenant l'une quelconque des caractéristiques précédentes, présentant ses blocs de calage qui sont en appui sous le plancher de la caisse de ce véhicule.

27. L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est une vue de dessus d'un caisson de batterie comprenant un dispositif de couvercle selon l'invention ;
[Fig. 2] est une vue d'un bloc de calage présentant une petite hauteur ; et
[Fig. 3] est une vue d'un bloc de calage présentant une grande hauteur.

31. Dans l'ensemble du document les mentions au-dessus ou côté supérieur sont relatives à la direction verticale d'un véhicule posé sur un sol horizontal.

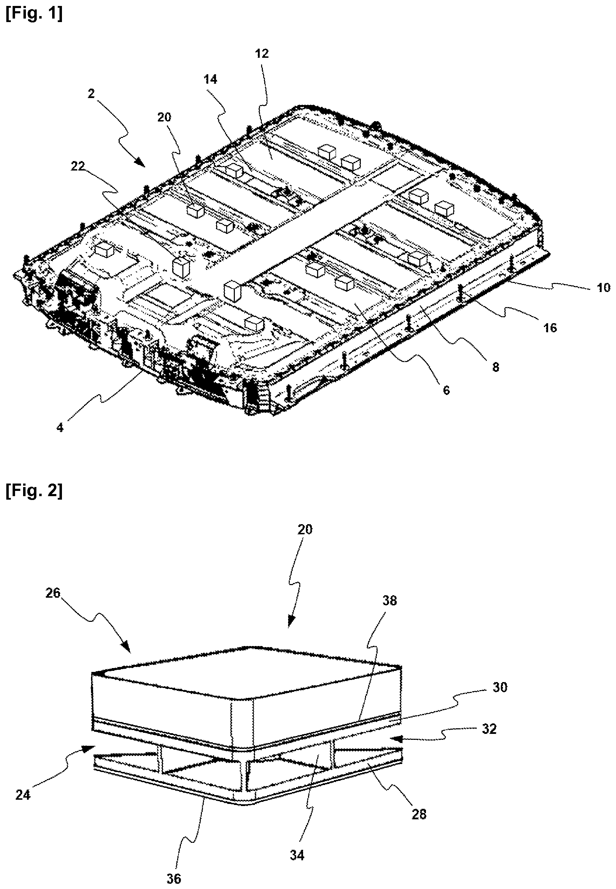

32. La figure 1 présente un caisson de batterie 2 formant un ensemble plat sensiblement rectangulaire, comportant une base 4 recevant un couvercle 6 présentant sur son contour des rebords descendant 8 se terminant par un bord horizontal 10 en appui sur la base pour former une étanchéité. Le contour du caisson 2 comporte sur le bord horizontal 10 des perçages recevant des vis de fixation 16 venant par en dessous, qui fixent ce caisson sous des longerons du véhicule.

33. Le couvercle 6 formé par une tôle emboutie comporte une face centrale avec des parties plates 12 disposées à différentes hauteurs, séparées par des nervures 14 présentant une faible épaisseur. Des blocs de calage de petite hauteur 20 et de grande hauteur 22 sont collés directement sur des parties plates 12 du couvercle 6, et répartis en différents endroits sur l'ensemble de la face centrale, en prenant en compte des hauteurs variées des parties plates afin de compenser ces variations.

34. Les surfaces supérieures de l'ensemble des blocs de calage 20, 22 sont dans un plan qui correspond à la surface inférieure du plancher de l'habitacle du véhicule pour, avec le caisson 2 en position, obtenir une légère compression d'une partie élastique de ces blocs afin d'assurer un calage anti-vibratoire du couvercle 6.

35. La figure 2 présente un bloc de calage de petite hauteur 20 présentant une forme extérieure carrée et une hauteur égale sensiblement à la moitié de la largeur de ce carré, qui comporte une cale inférieure rigide 24 et une cale supérieure souple 26 superposées, formant chacune la moitié de la hauteur.

36. La cale inférieure rigide 24 réalisée par un moulage de matière plastique, comporte une face inférieure 28 parallèle à une face supérieure 30, ces faces couvrant entièrement la section carrée. La cale rigide 24 reçoit en dessous un film adhésif inférieur 36 pour le collage sur le couvercle 6, et au-dessus un film adhésif supérieur 38 pour le collage de la cale souple 26.

37. Les faces identiques 28, 30 sont reliées l'une à l'autre par des cloisons verticales 34 donnant une rigidité à la cale inférieure 24, laissant entre elles des creux 32 présentant des formes qui permettent un retrait de noyau du moule formant ces creux lors de l'injection de la matière plastique. On obtient de cette manière en une seule opération de moulage les cales rigides 24 qui sont finies, avec une bonne rigidité en compression verticale tout en utilisant peu de matière pour réduire la masse et les coûts.

38. La cale supérieure souple 26 est formée par un bloc de mousse découpé, présentant un contour s'ajustant sur la face supérieure 3 de la cale rigide 24 de manière à se coller dessus grâce au film adhésif supérieur 38 pour obtenir un ensemble compact.

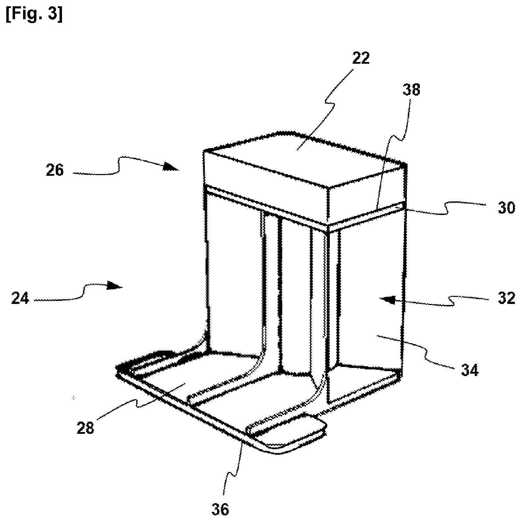

39. La figure 3 présente un bloc de calage de grande hauteur 22, comprenant une cale inférieure rigide 24 présentant une face inférieure carrée 28 recevant en dessous le film adhésif inférieur 36, et une face supérieure 30 recevant au-dessus le film adhésif supérieur 38. La face supérieure 30 couvre sensiblement la moitié de la face inférieure 28, en étant ajustée sur un côté de cette face inférieure.

40. Les cloisons verticales 34 comportent une partie basse de petite hauteur qui s'étend sur toute la largeur de la face inférieure 28, et une partie supérieure de grande hauteur qui reste inscrite dans la surface de la face supérieure 30. On obtient de cette manière à la fois un renforcement de la face inférieure 28 et une liaison rigide avec la face supérieure 30, tout en réduisant la quantité de matière par des creux 32.

41. La cale supérieure souple 26 s'ajustant sur la face supérieure 30 est formée dans le même matériau que celle du bloc de calage de petite hauteur 20, avec une découpe ajustée sur le contour de la face supérieure 30, et la même épaisseur pour standardiser ce composant.

42. On peut en variante suivant l'invention réaliser des blocs de calage présentant un nombre de hauteurs supérieur à deux pour s'adapter à la fois à des variations de niveau de la face centrale du couvercle 6 et du dessous du plancher de la caisse du véhicule, de manière à compenser différents écarts entre eux.

43. Les blocs de calage 20, 22 fixés sur les couvercles 6 lors de leur fabrication permettent de les empiler avec un écartement entre les faces centrales donné par les hauteurs des cales rigides 24, les cales souples 26 pouvant se comprimer, ce qui permet de répartir la masse de l'empilage complet sur l'ensemble de la surface de ces couvercles. On évite ainsi de charger les rebords 8 des couvercles 6, et de les déformer.

44. Les blocs de calage 22, 22 permettent aussi d'optimiser l'épaisseur de la lame d'air entre le caisson de batterie 2 et le plancher du véhicule, en limitant les vibrations du couvercle 6 et ses déformations en cas d'échauffement important de la batterie. On évite aussi avec les cales rigides 24 un contact et une conduction thermique du couvercle 6 avec le plancher du véhicule en cas d'échauffement important de la batterie qui augmenterait la pression dans le caisson 2 entraînant un soulèvement de ce couvercle.

## Revendications

1. Dispositif de couvercle de caisson plat de batterie (2) venant sous le plancher d'une caisse de véhicule automobile électrique ou hybride avec une lame d'air intermédiaire, comprenant un couvercle (6) comportant une tôle présentant une face centrale sensiblement plate disposant de rebords de fixation (8) sur son contour, **caractérisé en ce qu'**il comporte plusieurs blocs de calage (20, 22) avec le plancher de la caisse, qui sont fixés sur le dessus de la face centrale, chaque bloc (20, 22) comprenant au moins une cale rigide (24) et une cale souple (26) qui sont superposées.

2. Dispositif de couvercle selon la revendication 1, **caractérisé en ce que** les cales rigides (24) comportent deux faces parallèles (28, 30) fixées l'une sur le couvercle (6) et l'autre à la cale souple (26).

3. Dispositif de couvercle selon la revendication 2, **caractérisé en ce que** les faces parallèles (28, 30) sont reliées entre elles par des cloisons perpendiculaires (34) laissant entre elles des creux (32).

4. Dispositif de couvercle selon la revendication 2 ou 3, **caractérisé en ce que** les faces parallèles (28, 30) présentent des surfaces identiques.

5. Dispositif de couvercle selon l'une quelconque des revendications précédentes, **caractérisé en ce que** les cales rigides (24) sont réalisées par un moulage de matière plastique.

6. Dispositif de couvercle selon l'une quelconque des revendications précédentes, **caractérisé en ce que** les blocs de calage (20, 22) sont collés sur le couvercle (6).

7. Dispositif de couvercle selon l'une quelconque des revendications précédentes, **caractérisé en ce que** les cales souples (26) de tous les blocs de calage (20, 22) présentent la même épaisseur.

8. Dispositif de couvercle selon l'une quelconque des revendications précédentes, **caractérisé en ce que** les blocs de calage (20, 22) présentent plusieurs épaisseurs totales.

9. Caisson de batterie (2) comprenant une base (4) fermée par un couvercle (6) comportant des rebords descendants (8) fixés sur le contour de cette base (4), **caractérisé en ce qu'**il comporte un dispositif de couvercle selon l'une quelconque des revendications précédentes.

10. Véhicule automobile électrique ou hybride équipé d'un caisson de batterie (2) de traction de ce véhicule, **caractérisé en ce qu'**il comporte un dispositif de couvercle selon l'une quelconque des revendications 1 à 8, présentant ses blocs de calage (20, 22) qui sont en appui sous le plancher de la caisse de ce véhicule.

## Patentansprüche

1. Batterieflachkastendeckelvorrichtung (2), die unter dem Boden einer Karosserie eines elektrischen oder hybriden Kraftfahrzeugs mit einem dazwischenliegenden Luftblatt kommt, mit einem Deckel (6), der ein Blech mit einer im Wesentlichen flachen Mittelfläche aufweist, das Befestigungsflansche (8) an seiner Kontur aufweist, **dadurch gekennzeichnet, dass** sie mehrere Keilblöcke (20, 22) mit dem Boden der Karosserie aufweist, die an der Oberseite der Mittelfläche befestigt sind, wobei jeder Block (20, 22) mindestens einen starren Keil (24) und einen flexiblen Keil (26) aufweist, die übereinander angeordnet sind.

2. Deckelvorrichtung nach Anspruch 1, **dadurch gekennzeichnet, dass** die starren Keile (24) zwei parallele Flächen (28, 30) aufweisen, die eine an dem Deckel (6) und die andere an dem biegsamen Keil (26) befestigt sind.

3. Deckelvorrichtung nach Anspruch 2, **dadurch gekennzeichnet, dass** die parallelen Flächen (28, 30) durch senkrechte, zwischen sich Vertiefungen (32) freigebende Trennwände (34) miteinander verbunden sind.

4. Deckelvorrichtung nach Anspruch 2 oder 3, **dadurch gekennzeichnet, dass** die parallelen Flächen (28, 30) gleiche Flächen aufweisen.

5. Deckelvorrichtung nach einem der vorhergehenden Ansprüche, **dadurch gekennzeichnet, dass** die starren Keile (24) aus einem Kunststoffformteil hergestellt sind.

6. Deckelvorrichtung nach einem der vorhergehenden Ansprüche, **dadurch gekennzeichnet, dass** die Keilblöcke (20, 22) auf den Deckel (6) aufgeklebt sind.

7. Deckelvorrichtung nach einem der vorhergehenden Ansprüche, **dadurch gekennzeichnet, dass** die biegsamen Keile (26) aller Keilblöcke (20, 22) die gleiche Dicke aufweisen.

8. Deckelvorrichtung nach einem der vorhergehenden Ansprüche, **dadurch gekennzeichnet, dass** die Keilblöcke (20, 22) mehrere Gesamtdicken aufweisen.

9. Batteriebehälter (2) mit einer Basis (4), die durch einen Deckel (6) verschlossen ist, der abfallenden Flansche (8) aufweist, die an der Kontur dieser Basis (4) befestigt sind, **dadurch gekennzeichnet, dass** er eine Deckelvorrichtung nach einem der vorhergehenden Ansprüche aufweist.

10. Elektro- oder Hybrid-Kraftfahrzeug, das mit einem Batteriekasten (2) für den Antrieb dieses Fahrzeugs ausgestattet ist, **dadurch gekennzeichnet, dass** es eine Deckelvorrichtung nach einem der Ansprüche 1 bis 8 aufweist, die ihre Keilblöcke (20, 22) aufweist, die sich unter dem Boden des Fahrzeugaufbaus abstützen.

## Claims

1. Battery flat box cover device (2) coming under the floor of an electric or hybrid motor body with an intermediate air gap, comprising a cover (6) comprising a sheet having a substantially flat centre face having fixing rims (8) around its outline, wherein it comprises several calage blocks (20, 22) with the floor of the body, which are fixed to the top of the centre face, each block (20, 22) comprising at least one rigid wedge (24) and a flexible wedge (26) which are superposed.

2. A cover device according to claim 1, **characterised in that** the rigid wedges (24) comprise two parallel faces (28, 30), one fixed to the cover (6) and the other to the flexible wedge (26).

3. A cover device according to claim 2, **characterised in that** the parallel faces (28, 30) are interconnected by perpendicular partitions (34) leaving between them hollows (32).

4. Cover device according to claim 2 or 3, **characterised in that** the parallel faces (28, 30) have identical surfaces.

5. A cover device according to any one of the previous claims, wherein the rigid wedges (24) are realised by moulding of plastic material.

6. The cover device according to claim 1, wherein the calage units (20, 22) are glued to the cover (6), and wherein the cover is previous.

7. The cover device according to claim 1, wherein the flexible wedges (26) of all the calage blocks (20, 22) have the same thickness.

8. The cover device according to claim 1, wherein the calage units (20, 22) have several total thicknesses, and wherein the previous components are:

9. Battery box (2) comprising a base (4) closed by a cover (6) comprising descending rims (8) fixed to the outline of this base (4), **characterised in that** it comprises a cover device according to any one of the previous claims.

10. Electric or hybrid motor vehicle equipped with a battery box (2) for pulling this vehicle, **characterised in that** it comprises a cover device according to any one of Claims 1 to 8, having its calage units (20, 22) which bear under the floor of the body of this vehicle.
